# EUROPEAN PATENT SPECIFICATION

(11) **EP 2 858 879 B1**
(45) Date of publication and mention of the grant of the patent: **18.04.2018**
(21) Application number: 13803682.7
(22) Date of filing: 29.05.2013
(51) Int. Cl.: B62D 15/02, B60W 30/12

(54) **A METHOD AND A SYSTEM FOR LANE KEEPING ASSISTANCE FOR A VEHICLE**
VERFAHREN UND SYSTEM ZUR FAHRSPURVERFOLGUNGSHILFE FÜR EIN FAHRZEUG
PROCÉDÉ ET SYSTÈME D'AIDE AU SUIVI DE VOIE POUR VÉHICULE

(30) Priority: 12.06.2012 SE 1250607
(43) Date of publication of application: 15.04.2015
(73) Proprietor: Scania CV AB, 151 87 Södertälje (SE)
(72) Inventor: DEGERMAN, Pär, S-613 36 Oxelösund (SE); AH-KING, Joseph, S-151 60 Södertälje (SE); MEINECKE, Marc-Michael, 38524 Sassenburg (DE); STEINMEYER, Simon, 38102 Braunschweig (DE)
(74) Representative: Scania CV AB
(86) International application number: PCT/SE2013/050615
(87) International publication number: WO 2013/187825

(56) References cited:
- EP-A1- 1 867 542
- EP-A1- 2 025 577
- EP-A1- 2 248 710
- EP-A1- 2 253 522
- EP-A1- 2 338 758
- EP-A2- 2 426 034
- WO-A1-2007/145564
- WO-A1-2009/022947
- WO-A2-2011/110156
- DE-A1-102007 027 495
- US-A1- 2005 228 588
- US-A1- 2010 145 575
- US-A1- 2011 118 936
- US-A1- 2011 231 063
- US-A1- 2011 231 063

## Description

### TECHNICAL FIELD

The invention relates to a method for lane keeping assistance for a vehicle according to the preamble of claim 1. The invention also relates to a system for lane keeping assistance for a vehicle according to the preamble of claim 7.

### BACKGROUND ART

Manually keeping a vehicle in a desired position in a lane may require focus on that particular task making the driver tired and there is a risk that full attention is not paid to the traffic situation thus increasing risk of accident. Lane keep assist is a function that relieves the driver of a vehicle the stress of keeping inside the lane. It is commonly implemented by using a camera that monitors the lane delimiters. The lane information is sent to a calculating unit that in turn sends control signals to a steering actuator. The steering actuator is controlled in such a way that the driver needs to overcome a slight resistance before swerving out of the lane.

There are two ways of applying the torque to the steering. The first way is the use of a torque profile having a "bathtub" shape, where the lane delimiters act a kind of border that the driver must pass before exiting the lane. Within the lane, however, no or little additional torque is added. The second way uses a torque profile having more of a v-shape, where torque is added in a more continuous fashion which make the vehicle tend to stay in the centre of the lane.

Implementing a lane keep assist function in accordance with said first and second way on a heavy vehicle can make it very difficult and on occasions impossible to keep the entire vehicle inside its own lane when cornering and the system must thus be shut off. In these situations the need for assistance is elevated due to the high amount of precision needed to keep the vehicle in the correct part of the lane.

Also, DE 10 2007 027 495 A1, which is considered as the closest prior art according to the preamble of claims 1 and 7, describes a lane keeping system.

### OBJECTS OF THE INVENTION

An object of the present invention is to provide a method for lane keeping assistance for a vehicle which facilitates for the driver to keep the vehicle in the most suitable position during drive including cornering.

An object of the present invention is to provide a system for lane keeping assistance for a vehicle which facilitates for the driver to keep the vehicle in the most suitable position during drive including cornering.

### SUMMARY OF THE INVENTION

These and other objects, apparent from the following description, are achieved by method and a system for lane keeping assistance, a motor vehicle, a computer and a computer program, which are of the type stated by way of introduction and which in addition exhibits the features recited in the characterising clause of the appended claim 1, 7, 13, 14 and 15. Preferred embodiments of the method and system are defined in appended dependent claims 2-6 and 8-12.

Specifically an object of the invention is achieved by a method for lane keeping assistance for a vehicle comprising the steps of: detecting the lane; and controlling the torque for steering said vehicle during driving of said vehicle so as to follow said lane in a desired way, comprising the step of: providing a torque profile for said control based upon vehicle characteristics and lane characteristics, said torque profile specifying a vehicle lateral position on said lane. By providing a torque profile also based upon vehicle characteristics facilitates for the driver of a heavy/long vehicle to keep the vehicle in the most suitable position during drive including cornering. wherein a torque profile has three laterally separated torque profile portions specifying three different vehicle lateral positions on said lane. Hereby lane keep assistance is further improved in that the flexibility is increased such that the most suitable position may be chosen depending on the situation.

According to an embodiment the method further comprises the step of choosing a lateral position on said lane by the operator of said vehicle. Hereby the operator, e.g. the driver, has control of the decision of the most suitable position.

According to an embodiment the method further comprises the step of automatically choosing a lateral position on said lane. Hereby the driver does not need to focus on choosing the most suitable position on the lane, thus improving road safety.

According to an embodiment of the method said vehicle characteristics comprises at least one of vehicle length, vehicle width, articulation angle of the vehicle, lateral speed of the vehicle with respect a lane, and vehicle axle configuration. Hereby the accuracy of determining the most suitable position is increased, and thus, road safety is improved.

According to an embodiment of the method said lane characteristics comprises at least one of lane width, lane curvature, and number of lane sections. Hereby the accuracy of determining the most suitable position is increased, and thus, road safety is improved.

According to an embodiment the method further comprises the step of providing said torque profile for said control based upon characteristics of the surroundings of said vehicle along said lane. Hereby the accuracy of determining the most suitable position is increased, and thus, road safety is improved.

Specifically an object of the invention is achieved by a system for lane keeping assistance for a vehicle comprising means for detecting the lane; and means for controlling the torque for steering said vehicle during driving of said vehicle so as to follow said lane in a desired way, comprising means for providing a torque profile for said control based upon vehicle characteristics and lane characteristics, said torque profile specifying a vehicle lateral position on said lane. By providing a torque profile also based upon vehicle characteristics facilitates for the driver of a heavy/long vehicle to keep the vehicle in the most suitable position during drive including cornering and means for providing a torque profile having three laterally separated torque profile portions specifying three different vehicle lateral positions on said lane. Herby lane keep assistance is further improved in that the flexibility is increased such that the most suitable position may be chosen depending on the situation.

According to an embodiment the system further comprises for choosing a lateral position on said lane by the operator of said vehicle. Hereby the operator, e.g. the driver, has control of the decision of the most suitable position.

According to an embodiment the system further comprises means for automatically choosing a lateral position on said lane. Hereby the driver does not need to focus on choosing the most suitable position on the lane, thus improving road safety.

According to an embodiment of the system said vehicle characteristics comprises at least one of vehicle length, vehicle width, articulation angle of the vehicle, lateral speed of the vehicle with respect to a lane, and vehicle axle configuration. Hereby the accuracy of determining the most suitable position is increased, and thus, road safety is improved.

According to an embodiment of the system said lane characteristics comprises at least one of lane width, lane curvature, and number of lane sections. Hereby the accuracy of determining the most suitable position is increased, and thus, road safety is improved.

According to an embodiment the system further comprises means for providing said torque profile for said control based upon characteristics of the surroundings of said vehicle along said lane. Hereby the accuracy of determining the most suitable position is increased, and thus, road safety is improved.

### BRIEF DESCRIPTION OF THE DRAWINGS

A better understanding of the present invention will be had upon the reference to the following detailed description when read in conjunction with the accompanying drawings, wherein like reference characters refer to like parts throughout the several views, and in which:
Fig. 1 schematically illustrates a side view of a motor vehicle according to an embodiment of the present invention;
Fig. 2 schematically illustrates a motor vehicle having a towing vehicle and a trailer driving in a curved lane of a road;
Fig. 3 schematically illustrates a torque profile for controlling the torque for steering a vehicle according to an embodiment of the present invention;
Fig. 4 schematically illustrates a curved lane of a road with different vehicle lateral positions specified by the torque profile;
Fig. 5 schematically illustrates a system for lane keeping assistance for a vehicle according to an embodiment of the present invention;
Fig. 6 schematically illustrates a block diagram of a method for lane keeping assistance for a vehicle according to an embodiment of the present invention; and
Fig. 7 schematically illustrates a computer according to an embodiment of the present invention.

### DETAILED DESCRIPTION

Hereinafter the term "link" refers to a communication link which may be a physical connector, such as an optoelectronic communication wire, or a non-physical connector such as a wireless connection, for example a radio or microwave link.

Hereinafter the term "lane delimiter" refers to any detectable means delimiting the lane/ constituting a lane border or the like, including road markings, safety fences/ crash barriers, end of lane side or the like.

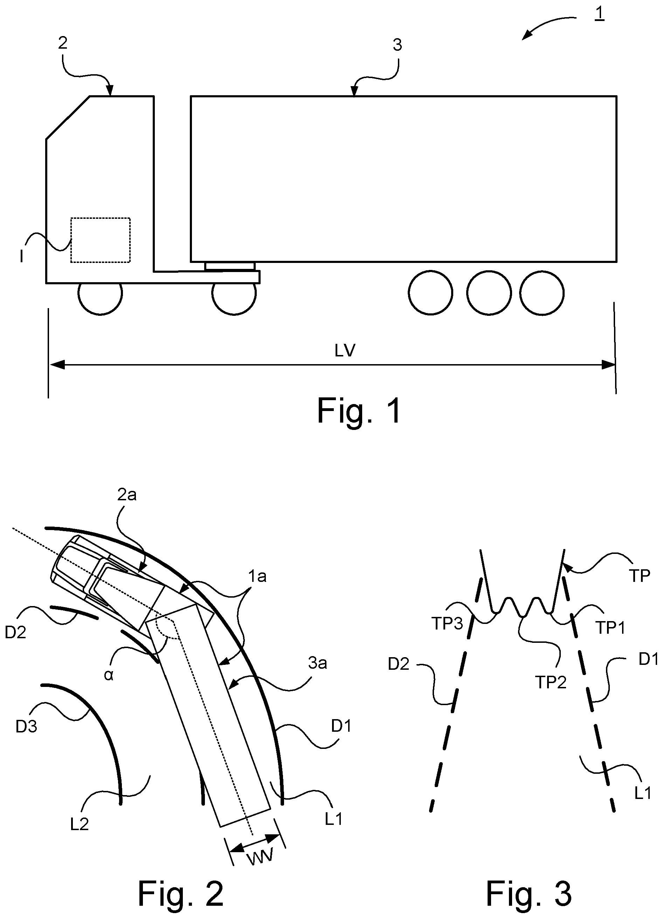

Fig. 1 schematically illustrates a side view of a motor vehicle according to an embodiment of the present invention. The vehicle in fig. 1 is constituted by a truck 1 with a towing vehicle 2 and a trailer 3. Said vehicle could be any kind of vehicle such as a bus, a truck with no trailer or more than one trailer, a camper or the like. The vehicle 1 comprises a system I according to the present invention. The vehicle has a length LV.

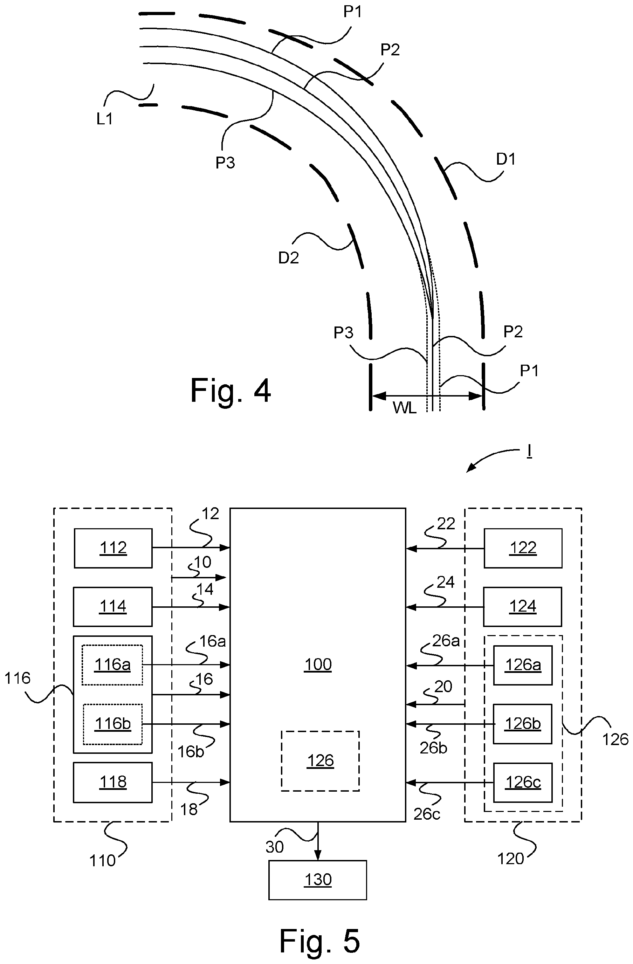

Fig. 2 schematically illustrates a motor vehicle driving in a curved lane L1, fig. 3 a torque profile TP for controlling the torque for steering a vehicle according to an embodiment of the present invention, and fig. 4 a curved lane of a road with different vehicle lateral positions specified by the torque profile according to an embodiment of the present invention.

The motor vehicle 1a in fig. 2 has a towing vehicle 2a and a trailer 3a driving in a curved lane L1 of a road. The vehicle has a width WV. Said road comprises a first lane L1 on which the vehicle is driving, and a second lane L2 adjacent to said first lane. Said lanes L1, L2 are divided by delimiters D1, D2, D3. Said delimiters D1, D2, D3 may be constituted by road marks and/or crash barriers or the like. The lane L1 has as shown in fig. 4 a width WL.

The torque profile TP for controlling the torque for steering a vehicle specifies three laterally separated torque profile portions TP1, TP2, TP3 specifying three different vehicle lateral positions P1, P2, P3 on said lane L1, a right most profile portion TP1 specifying a right most lateral position P1 on said lane L1, a middle profile portion TP2 specifying a middle lateral position P2 on said lane L1, and a left most profile portion TP3 specifying a left most lateral position P3 on said lane L1.

The actual lateral position of the right most, middle and left most position P1, P2, P3 on the lane may vary depending on said lane characteristics and vehicle characteristics. The torque profile may thus vary depending on said lane characteristics and vehicle characteristics.

On a straight road the torque profile may be a V-shape corresponding to the middle position assisting the driver to keep the vehicle in the middle of the lane as shown in fig. 4.

However, also on a straight road a torque profile having e.g. a left most, a middle and a right most lateral position may be applied, see fig. 4 dotted lines. The left most position would be most suitable e.g. if obstacles such as parked vehicles and/or trailers are present on the right roadside assuming right-hand traffic and vehicle driving on the right most lane. The right most position would be most suitable e.g. if traffic is heavy with oncoming traffic or traffic travelling in adjacent lane, assuming right-hand traffic and vehicle driving on the right most lane. The middle position would be most suitable during normal drive with no disturbances on right or left side, when driving on a wide lane etc.
In a curve, a torque profile having e.g. a left most, a middle and a right most lateral position may be applied e.g. according to fig. 3. The operator may choose the most suitable lateral position, or the system, e.g. the system I described with reference to fig. 5, can automatically select the most suitable torque profile, i.e. the most suitable lateral position, based upon lane characteristics and vehicle characteristics. If there is enough room for making the turn with the complete vehicle completely inside the lane then the middle position may be used. If the lane in a curve is narrow or the curve is sharp so that the vehicle needs to cut other lane(s) when making the turn, the right most lateral position is preferably chosen, assuming right-hand drive. If drive on the roadside should be avoided for any reason the left most lateral position is preferably chosen, assuming right hand drive.
The torque profile according to the present invention may have any suitable shape depending on the situation. The torque profile according to the present invention may have any suitable number of laterally separated torque profile portions such as three or more than three. The torque profile according to the present invention may have any suitable shape such as e.g. more U-shaped, bathtub-shaped or the like.
Fig. 5 schematically illustrates a system I for lane keeping assistance for a vehicle according to an embodiment of the present invention.
The system I comprises an electronic control unit 100 for said lane keep assistance.
The system I comprises lane characteristic determining means 110 for determining lane characteristics. Said lane characteristics comprises at least one of lane width, lane curvature, lane obstacles, traffic situation and number of lane sections.

Said lane characteristic determining means 110 comprises lane width determining means 112 for determining the width of the lane on which the vehicle is travelling. Said lane width determining means 112 comprises according to an embodiment a camera member for detecting lane delimiters along the road travelled by the vehicle. Said camera member is arranged to detect said lane delimiters in connection to and in front of the vehicle along said road. Said lane width determining means 112 may comprise any suitable means for determining the width of the lane including any suitable detector and/or map data along the road travelled.

Said lane characteristic determining means 110 comprises lane curvature determining means 114 for determining curvature of the lane on which the vehicle is travelling. Said lane curvature determining means 114 comprises according to an embodiment a camera member for detecting lane delimiters in front of the vehicle along said road so as to determine said curvature. Said lane curvature determining means 114 comprises according to an embodiment lateral speed determining means 124 for determining the lateral speed of the vehicle so as to determining curvature of the lane on which the vehicle is travelling.

Said lane characteristic determining means 110 comprises surrounding characteristic determining means 116 for determining characteristics of the surroundings of said vehicle along the lane of the road on which said vehicle is travelling. Said characteristics of the surrounding may comprise obstacles along said lane and/or traffic in connection to said lane.

Said surrounding characteristic determining means 116 thus comprises lane obstacle determining means 116a for determining obstacles in connection to said lane along which the vehicle is travelling. Said obstacles may be any kind of obstacle in connection to said lane, i.e. on or adjacent to said lane, such as vehicles parked on the roadside, road works, road side which is not suitable to drive on due to e.g. lose ground or the like etc. Said obstacle determining means comprises according to an embodiment a camera member and/or a laser member and/or a radar member for detecting obstacles along the road travelled by the vehicle. Said obstacle determining means may comprise any suitable means for determining obstacles including any suitable detector such as IR-camera.

Said surrounding characteristic determining means 116 thus comprises traffic determining means 116b for determining traffic in connection to said lane along which the vehicle is travelling. Said traffic may be any kind of traffic in connection to said lane, i.e. on or adjacent to said lane, such as oncoming traffic, traffic in adjacent lanes, overtaking vehicles etc. Said traffic determining means 116b comprises according to an embodiment a camera member and/or a laser member and/or a radar member for detecting traffic along the road travelled by the vehicle.

Said lane characteristic determining means 110 comprises lane section determining means 118 for determining number of lane sections along the road on which the vehicle is travelling. Said lane section determining means 118 comprises according to an embodiment a camera member. Said lane section determining means 118 may comprise any suitable means for determining the lane section including any suitable detector and/or map data along the road travelled.

The system I comprises vehicle characteristic means 120. Said vehicle characteristics comprises at least one of vehicle length, vehicle width, articulation angle of the vehicle, lateral speed of the vehicle with respect to a lane, and vehicle axle configuration.

Said vehicle characteristic means 120 comprises articulation angle determining means 122 for determining the angle between a towing vehicle and a trailer and/or the angle between a trailer and a second trailer connected to the first trailer. Said articulation angle determining means 122 comprises according to an embodiment an angle sensor member. Said articulation angle determining means 122 comprises according to an embodiment a cinematic vehicle model, wherein vehicle parameters such as length, position of fifth wheel on the towing vehicle etc. are used as input, wherein the articulation angle is calculated using yaw rate and speed.

Said vehicle characteristic means 120 comprises lateral speed determining means 124 for determining lateral speed of the vehicle. According to an embodiment said lateral speed determining means 124 comprises a Global Positioning System, GPS.

Said vehicle characteristic means 120 comprises vehicle characteristic input data 126.

Said vehicle characteristic input data 126 comprises vehicle length input data 126a. Said vehicle length input data 126a comprises length of entire vehicle and were applicable length of towing vehicle and length of trailer(s).

Said vehicle characteristic input data 126 comprises vehicle width input data 126b for width of said vehicle. Said vehicle width input data 126b comprises were applicable width of towing vehicle and width of trailer(s).

Said vehicle characteristic input data 126 comprises vehicle axle configuration input data 126c for number of wheel axles, position of wheel axles along said vehicle, lifted axle status and weight per axle.

Said vehicle characteristics 120 comprises according to an embodiment fifth gear position determining means for determining the position of the fifth gear on the towing vehicle of a vehicle having a towing vehicle and a trailer, and thus determining the position of the trailer relative to the cab of the towing vehicle.

The system I further comprises steering actuator control means 130 for controlling the steering actuator for controlling the resistance of the steering wheel of the vehicle by applying a torque profile to the steering actuator specifying a vehicle lateral position on said lane.

The electronic control unit 100 is signal connected to said lane characteristic determining means 110 via a link 10. The electronic control unit 100 is via the link 10 arranged to receive a signal from said lane characteristic determining means 110 representing lane characteristic data.

The electronic control unit 100 is signal connected to said lane width determining means 112 via a link 12. The electronic control unit 100 is via the link 12 arranged to receive a signal from said lane width determining means 112 representing lane width data.

The electronic control unit 100 is signal connected to said lane curvature determining means 114 via a link 14. The electronic control unit 100 is via the link 14 arranged to receive a signal from said lane curvature determining means 114 representing lane curvature data for curvature of the lane on which the vehicle is travelling.

The electronic control unit 100 is signal connected to said surrounding characteristic determining means 116 via a link 16. The electronic control unit 100 is via the link 16 arranged to receive a signal from said surrounding characteristic determining means 116 representing surrounding characteristic data for surrounding characteristics such as obstacles and/or traffic along the lane on which the vehicle is travelling.

The electronic control unit 100 is signal connected to said lane obstacle determining means 116a via a link 16a. The electronic control unit 100 is via the link 16a arranged to receive a signal from said lane obstacle determining means 116a representing obstacle data for obstacles along the lane on which the vehicle is travelling.

The electronic control unit 100 is signal connected to said traffic determining means 116b via a link 16b. The electronic control unit 100 is via the link 16b arranged to receive a signal from said traffic determining means 116b representing traffic data for traffic along the lane on which the vehicle is travelling.

The electronic control unit 100 is signal connected to said lane section determining means 118 via a link 18. The electronic control unit 100 is via the link 18 arranged to receive a signal from said lane section determining means 118 representing lane section data for number of lanes adjacent to the lane on which the vehicle is travelling.

The electronic control unit 100 is signal connected to said vehicle characteristic means 120 via a link 20. The electronic control unit 100 is via the link 20 arranged to receive a signal from said vehicle characteristic means 120 representing vehicle characteristic data.

The electronic control unit 100 is signal connected to said articulation angle determining means 122 via a link 22. The electronic control unit 100 is via the link 22 arranged to receive a signal from said articulation angle determining means 122 representing articulation angle data for said vehicle.

The electronic control unit 100 is signal connected to said lateral speed determining means 124 via a link 24. The electronic control unit 100 is via the link 24 arranged to receive a signal from said lateral speed determining means 124 representing lateral speed data for lateral speed of said vehicle.

The electronic control unit 100 is signal connected to said vehicle length input data 126a via a link 26a. The electronic control unit 100 is via the link 26a arranged to receive a signal from said vehicle length input data 126a representing vehicle length data for the length of the vehicle. According to an alternative embodiment said vehicle length input data 126a is stored in the electronic control unit 100.

The electronic control unit 100 is signal connected to said vehicle width input data 126b via a link 26b. The electronic control unit 100 is via the link 26b arranged to receive a signal from said vehicle width input data 126b representing vehicle width data. According to an alternative embodiment said vehicle width input data 126b is stored in the electronic control unit 100.

The electronic control unit 100 is signal connected to said vehicle axle configuration input data 126c via a link 26c. The electronic control unit 100 is via the link 26c arranged to receive a signal from said vehicle axle configuration input data 126c representing vehicle axle data for number of axles on the vehicle. According to an alternative embodiment said vehicle axle configuration input data 126c is stored in the electronic control unit 100.

Said vehicle characteristic input data 126 is thus according to an embodiment stored in the electronic control unit 100.

The electronic control unit 100 is signal connected to said steering actuator control means 130 via a link 30. The electronic control unit 100 is via the link 30 arranged to send a signal to said steering actuator control means 130 representing torque data according to a torque profile for controlling the resistance of the steering wheel of the vehicle.

The electronic control unit 100 is arranged to process said lane characteristic data and vehicle characteristic data for determining torque data for providing a torque profile for controlling the resistance of the steering wheel of the vehicle, said torque profile specifying a vehicle lateral position on said lane.

The electronic control unit 100 is according to an embodiment arranged to process said lane width data, lane curvature data and/or surrounding characteristic data comprising said obstacle data, traffic data, and/or lane selection data, and said articulation angle data, lateral speed data, vehicle length data, vehicle width data and/or vehicle axle data for determining said torque data for providing a torque profile for controlling the resistance of the steering wheel of the vehicle, said torque profile specifying a vehicle lateral position on said lane.

The lateral position on said lane is according to an embodiment chosen by the operator of said vehicle, wherein the driver receives support from the system I to remain in the chosen lateral position of the lane in such a way that the resistance in the steering wheel increases through increased torque in the steering actuator 130 should the driver depart from said chosen lateral position. For example the torque profile according to fig. 3 may be provided based upon lane characteristics and vehicle characteristics, where the right most, middle and left most positions are options which may have different advantages/disadvantages depending on e.g. the curvature and surrounding. If the driver chooses the right most position the driver will be assisted to remain in the right most lateral position on the lane. If the driver chooses the middle position the driver will be assisted to remain in the middle position on the lane. If the driver chooses the left most position the driver will be assisted to remain in the left most lateral position on the lane. The actual lateral position of the right most, middle and left most position on the lane may vary depending on said lane characteristics and vehicle characteristics.

The lateral position on said lane is according to an embodiment automatically chosen by the system I, i.e. the electronic control unit 100 sends a signal representing torque data for the most suitable lateral position based upon said lane characteristics and vehicle characteristics, wherein the driver receives support from the system I to remain in the lateral position of the lane chosen by the system I in such a way that the resistance in the steering wheel increases through increased torque in the steering actuator 130 should the driver depart from said chosen lateral position.

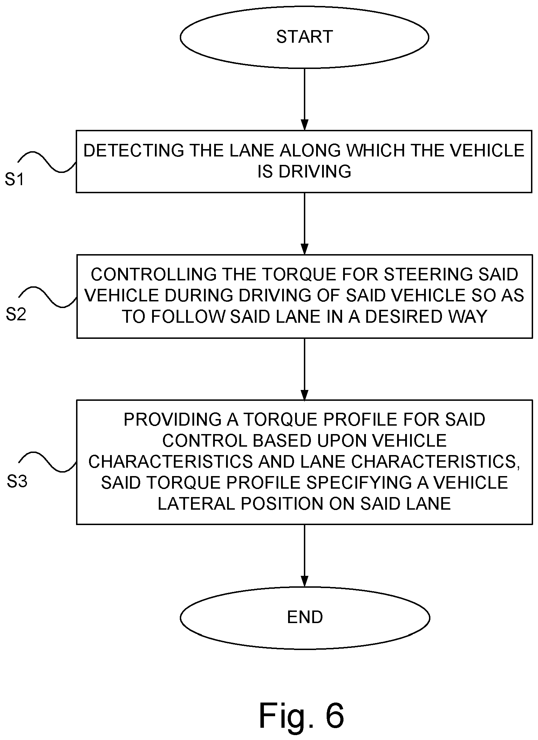

Fig. 6 schematically illustrates a block diagram of a method for lane keeping assistance for a vehicle according to an embodiment of the present invention.

According to an embodiment said method for lane keeping assistance for a vehicle comprises a first step S1. In this step the lane along which the vehicle is driving is detected.

According to an embodiment said method for lane keeping assistance for a vehicle comprises a second step S2. In this step the torque for steering said vehicle during driving of said vehicle is controlled so as to follow said lane in a desired way

According to an embodiment said method for lane keeping assistance for a vehicle comprises a third step S3. In this step a torque profile is provided for said control based upon vehicle characteristics and lane characteristics, said torque profile specifying a vehicle lateral position on said lane.

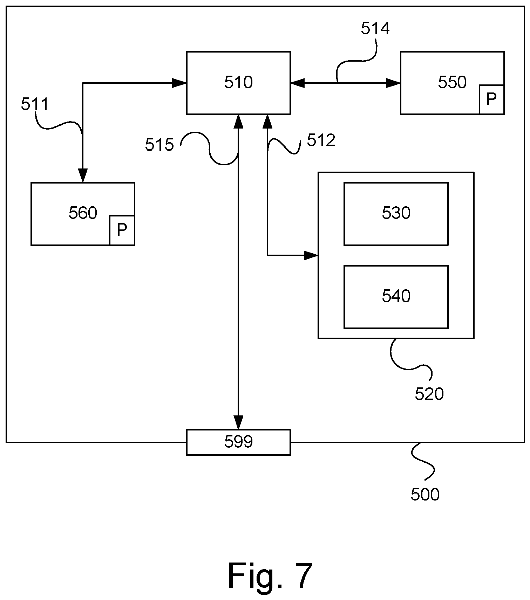

With reference to Figure 7, a diagram of an apparatus 500 is shown. The electronic control unit 100 described in fig. 5 may according to an embodiment comprise apparatus 500. Apparatus 500 comprises a non-volatile memory 520, a data processing device 510 and a read/write memory 550. Non-volatile memory 520 has a first memory portion 530 wherein a computer program, such as an operating system, is stored for controlling the function of apparatus 500. Further, apparatus 500 comprises a bus controller, a serial communication port, I/O-means, an A/D-converter, a time date entry and transmission unit, an event counter and an interrupt controller (not shown). Non-volatile memory 520 also has a second memory portion 540.

A computer program P is provided comprising routines for lane keeping assistance for a vehicle. The program P comprises routines for detecting the lane along which the vehicle is driving. The program P comprises routines for controlling the torque for steering said vehicle during driving of said vehicle so as to follow said lane in a desired way. The program P comprises routines for providing a torque profile for said control based upon vehicle characteristics and lane characteristics, said torque profile specifying a vehicle lateral position on said lane. The computer program P may be stored in an executable manner or in a compressed state in a separate memory 560 and/or in read/write memory 550.

When it is stated that data processing device 510 performs a certain function it should be understood that data processing device 510 performs a certain part of the program which is stored in separate memory 560, or a certain part of the program which is stored in read/write memory 550.

Data processing device 510 may communicate with a data communications port 599 by means of a data bus 515. Non-volatile memory 520 is adapted for communication with data processing device 510 via a data bus 512. Separate memory 560 is adapted for communication with data processing device 510 via a data bus 511. Read/write memory 550 is adapted for communication with data processing device 510 via a data bus 514. To the data communications port 599 e.g. the links connected to the electronic control unit 100 may be connected.

When data is received on data port 599 it is temporarily stored in second memory portion 540. When the received input data has been temporarily stored, data processing device 510 is set up to perform execution of code in a manner described above. The signals received on data port 599 can be used by apparatus 500 for detecting the lane along which the vehicle is driving. The signals received on data port 599 can be used by apparatus 500 for controlling the torque for steering said vehicle during driving of said vehicle so as to follow said lane in a desired way. The signals received on data port 599 can be used by apparatus 500 for providing a torque profile for said control based upon vehicle characteristics and lane characteristics, said torque profile specifying a vehicle lateral position on said lane.

Parts of the methods described herein can be performed by apparatus 110 by means of data processing device 510 running the program stored in separate memory 560 or read/write memory 550. When apparatus 100 runs the program, parts of the methods described herein are executed.

The foregoing description of the preferred embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated.

## Claims

1. A method for lane keeping assistance for a vehicle (1, 1a) comprising the steps of: detecting (S1) the lane (L1); and controlling (S2) the torque for steering said vehicle during driving of said vehicle so as to follow said lane in a desired way, **characterized by** the step of: providing (S3) a torque profile (TP) comprising three laterally separated torque profile portions for said control based upon vehicle characteristics of said vehicle and lane characteristics, said torque profile (TP) specifying different vehicle lateral positions (P1, P2, P3) on said lane (L1).

2. A method according to claim 1, further comprising the step of receiving a choice of a lateral position (P1, P2, P3) on said lane (L1) made by the operator of said vehicle based on said vehicle characteristics and said lane characteristics, said torque profile (TP) specifying said chosen lateral position.

3. A method according to claim 1, further comprising the step of automatically choosing a lateral position (P1, P2, P3) on said lane (L1), based on said vehicle characteristics and said lane characteristics, said torque profile (TP) specifying said chosen lateral position.

4. A method according to any of claims 1-3, wherein said vehicle characteristics comprises at least one of vehicle length (LV), vehicle width (WV), articulation angle (α) of the vehicle, lateral speed of the vehicle with respect to a lane, and vehicle axle configuration.

5. A method according to any of claims 1-4, wherein said lane characteristics comprises at least one of lane width (WL), lane curvature, and number of lane sections.

6. A method according to any of claims 1-5, further comprising the step of providing said torque profile (TP) for said control based upon characteristics of the surroundings of said vehicle along said lane (L1).

7. A system (I) for lane keeping assistance for a vehicle (1, 1a) comprising means (112) for detecting the lane (L1); and means for controlling the torque for steering said vehicle during driving of said vehicle so as to follow said lane in a desired way, **characterized by** means (100, 110, 120) for providing a torque profile (TP) comprising three laterally separated torque profile portions for said control based upon vehicle characteristics of said vehicle and lane characteristics, said torque profile (TP) specifying different vehicle lateral positions (P1, P2, P3) on said lane.

8. A system according to claim 7, further comprising means for choosing a lateral position on said lane (L1) by the operator of said vehicle based on said vehicle characteristics and said lane characteristics, said torque profile (TP) specifying said chosen lateral position.

9. A system according to claim 7, further comprising means for automatically choosing a lateral position (P1, P2, P3) on said lane (L1) based on said vehicle characteristics and said lane characteristics, said torque profile (TP) specifying said chosen lateral position.

10. A system according to any of claims 7-9, wherein said vehicle characteristics comprises at least one of vehicle length (LV), vehicle width WV), articulation angle (α) of the vehicle, lateral speed of the vehicle with respect to a lane, and vehicle axle configuration.

11. A system according to any of claims 7-10, wherein said lane characteristics comprises at least one of lane width (WL), lane curvature, and number of lane sections.

12. A system according to any of claims 7-11, further comprising means for providing said torque profile (TP) for said control based upon characteristics of the surroundings of said vehicle along said lane (L1).

13. A motor vehicle (1, 1a) comprising a system (I) according to any of claims 7-12.

14. Computer program (P) for lane keeping assistance for a vehicle (1, 1a), said computer program (P) comprising program code which, when run by an electronic control unit (100) or other computer (500) connected to the electronic control unit (100), causing the electronic control unit (100) to perform the steps according to claims 1-6.

15. Computer program product comprising a digital storage medium storing the computer program (P) according to claim 14.

## Patentansprüche

1. Verfahren zur Spurhalteassistenz für ein Fahrzeug (1, 1a), das die Schritte aufweist: Detektieren (S1) der Spur (L1); und Steuern (S2) des Drehmoments zum Lenken des Fahrzeugs während des Fahrens des Fahrzeugs, um der Spur auf eine gewünschte Weise zu folgen,
**gekennzeichnet durch** den Schritt: Bereitstellen (S3) eines Drehmomentprofils (TP), das drei seitlich getrennte Drehmomentprofilabschnitte auf Basis von Fahrzeugkennwerten des Fahrzeugs und Spurkennwerten für die Steuerung aufweist, wobei das Drehmomentprofil (TP) unterschiedliche seitliche Positionen (P1, P2, P3) auf der Spur (L1) angibt.

2. Verfahren nach Anspruch 1, ferner mit dem Schritt: Empfangen einer Wahl einer seitlichen Position (P1, P2, P3) auf der Spur (L1) durch den Betreiber des Fahrzeugs auf Basis der Fahrzeugkennwerte und der Spurkennwerte, wobei das Drehmomentprofil (TP) die gewählte seitliche Position angibt.

3. Verfahren nach Anspruch 1, das ferner den Schritt der automatischen Wahl einer seitlichen Position (P1, P2, P3) auf der Spur (L1) auf Basis der Fahrzeugkennwerte und der Spurkennwerte aufweist, wobei das Drehmomentprofil (TP) die gewählte seitliche Position angibt.

4. Verfahren nach einem der Ansprüche 1 bis 3, wobei die Fahrzeugkennwerte mindestens eine Größe von Fahrzeuglänge (LV), Fahrzeugbreite (VW), Knickwinkel (▪) des Fahrzeugs und seitliche Geschwindigkeitskomponente des Fahrzeugs relativ zu einer Spur oder die Konfiguration der Fahrzeugachse umfassen.

5. Verfahren nach einem der Ansprüche 1 bis 4, wobei die Spurkennwerte mindestens entweder die Spurbreite (WL), die Spurkrümmung oder die Anzahl der Spurabschnitte umfassen.

6. Verfahren nach einem der Ansprüche 1 bis 5, das ferner den Schritt der Bereitstellung des Drehmomentprofils (TP) für die Steuerung auf Basis der Kennwerte der Umgebung des Fahrzeugs entlang der Spur (L1) aufweist.

7. System (I) zur Spurhalteassistenz für ein Fahrzeug (1, 1a), das ein Mittel (112) zum Detektieren der Spur (L1) und ein Mittel zum Steuern des Drehmoments aufweist, um das Fahrzeug während des Fahrens des Fahrzeugs so zu lenken, dass es der Spur auf eine gewünschte Weise folgt, **gekennzeichnet durch** Mittel (100, 110, 120) zum Bereitstellen eines Drehmomentprofils (TP) auf Basis von Fahrzeugkennwerten des Fahrzeugs und Spurkennwerten, das drei seitlich getrennte Drehmomentprofilabschnitte für die Steuerung aufweist, wobei das Drehmomentprofil (TP) unterschiedliche seitliche Positionen (P1, P2, P3) auf der Spur angibt.

8. System nach Anspruch 7, das ferner ein Mittel zur Wahl einer seitlichen Position auf der Spur (L1) durch den Betreiber des Fahrzeugs auf Basis der Fahrzeugkennwerte und der Spurkennwerte aufweist, wobei das Drehmomentprofil (TP) die gewählte seitliche Position angibt.

9. System nach Anspruch 7, das ferner ein Mittel zur automatischen Wahl einer seitlichen Position (P1, P2, P3) auf der Spur (L1) auf Basis der Fahrzeugkennwerte und der Spurkennwerte aufweist, wobei das Drehmomentprofil (TP) die gewählte seitliche Position angibt.

10. System nach einem der Ansprüche 7 bis 9, wobei die Fahrzeugkennwerte mindestens eine Größe von Fahrzeuglänge (LV), Fahrzeugbreite (VW), Knickwinkel (▪) des Fahrzeugs und seitliche Geschwindigkeitskomponente des Fahrzeugs relativ zu einer Spur oder die Konfiguration der Fahrzeugachse umfassen

11. System nach einem der Ansprüche 7 bis 10, wobei die Spurkennwerte mindestens entweder die Spurbreite (WL), die Spurkrümmung oder die Anzahl der Spurabschnitte umfassen.

12. System nach einem der Ansprüche 7 bis 11, das ferner ein Mittel zur Bereitstellung des Drehmomentprofils (TP) für die Steuerung auf Basis der Kennwerte der Umgebung des Fahrzeugs entlang der Spur (L1) aufweist.

13. Kraftfahrzeug (1, 1a), das ein System (I) nach einem der Ansprüche 7 bis 12 aufweist.

14. Computerprogramm (P) für die Spurhalteassistenz für ein Fahrzeug (1, 1a), wobei das Computerprogramm (P) einen Programmcode aufweist, der bei Ausführung durch eine elektronische Steuereinheit (100) oder einen mit der elektronischen Steuereinheit (100) verbundenen anderen Computer (500) die elektronische Steuereinheit (100) veranlasst, die Schritte nach den Ansprüchen 1 bis 6 auszuführen.

15. Computerprogrammprodukt, das ein digitales Speichermedium aufweist, das das Computerprogramm (P) nach Anspruch 14 speichert.

## Revendications

1. Procédé d'aide au suivi de voie de circulation pour un véhicule (1, 1a), comprenant les étapes de : détecter (S1) la voie de circulation (L1) ; et commander (S2) le couple pour diriger ledit véhicule durant la conduite dudit véhicule de façon à suivre ladite voie de circulation d'une manière souhaitée, **caractérisé en ce qu'**il comprend l'étape de : délivrer (S3) un profil de couple (TP) comprenant trois parties de profil de couple séparées latéralement pour ladite commande en fonction de caractéristiques de véhicule dudit véhicule et de caractéristiques de voie de circulation, ledit profil de couple (TP) spécifiant différentes positions latérales de véhicule (P1, P2, P3) sur ladite voie de circulation (L1).

2. Procédé selon la revendication 1, comprenant de plus l'étape de réception d'un choix d'une position latérale (P1, P2, P3) sur ladite voie de circulation (L1), effectué par l'opérateur dudit véhicule en fonction desdites caractéristiques de véhicule et desdites caractéristiques de voie de circulation, ledit profil de couple (TP) spécifiant ladite position latérale choisie.

3. Procédé selon la revendication 1, comprenant de plus l'étape de choisir automatiquement une position latérale (P1, P2, P3) sur ladite voie de circulation (L1), en fonction desdites caractéristiques de véhicule et desdites caractéristiques de voie de circulation, ledit profil de couple (TP) spécifiant ladite position latérale choisie.

4. Procédé selon l'une quelconque des revendications 1 à 3, dans lequel lesdites caractéristiques de véhicule comprennent au moins l'une des caractéristiques suivantes : une longueur de véhicule (LV), une largeur de véhicule (WV), un angle d'articulation (α) du véhicule, une vitesse latérale du véhicule par rapport à une voie de circulation, et une configuration d'essieu de véhicule.

5. Procédé selon l'une quelconque des revendications 1 à 4, dans lequel lesdites caractéristiques de voie de circulation comprennent au moins l'une des caractéristiques suivantes : une largeur de voie de circulation (WL), une courbure de voie de circulation, et un nombre de sections de voie de circulation.

6. Procédé selon l'une quelconque des revendications 1 à 5, comprenant de plus l'étape de fournir ledit profil de couple (TP) pour ladite commande en fonction de caractéristiques de l'environnement dudit véhicule le long de ladite voie de circulation (L1).

7. Système (I) d'aide au suivi de voie pour un véhicule (1, 1a), comprenant des moyens (112) pour détecter la voie de circulation (L1) ; et des moyens pour commander le couple pour diriger ledit véhicule durant la conduite dudit véhicule de façon à suivre ladite voie de circulation d'une manière souhaitée, **caractérisé par** des moyens (100, 110, 120) pour délivrer un profil de couple (TP) comprenant trois parties de profil de couple séparées latéralement pour ladite commande en fonction de caractéristiques de véhicule dudit véhicule et de caractéristiques de voie de circulation, ledit profil de couple (TP) spécifiant différentes positions latérales de véhicule (P1, P2, P3) sur ladite voie de circulation.

8. Système selon la revendication 7, comprenant de plus des moyens pour faire choisir, par l'opérateur dudit véhicule, une position latérale sur ladite voie de circulation (L1) en fonction desdites caractéristiques de véhicule et desdites caractéristiques de voie de circulation, ledit profil de couple (TP) spécifiant ladite position latérale choisie.

9. Système selon la revendication 7, comprenant de plus des moyens pour choisir automatiquement une position latérale (P1, P2, P3) sur ladite voie de circulation en fonction desdites caractéristiques de véhicule et desdites caractéristiques de voie de circulation, ledit profil de couple (TP) spécifiant ladite position latérale choisie.

10. Système selon l'une quelconque des revendications 7 à 9, dans lequel lesdites caractéristiques de véhicule comprennent au moins l'une des caractéristiques suivantes : une longueur de véhicule (LV), une largeur de véhicule (WV), un angle d'articulation (α) du véhicule, une vitesse latérale du véhicule par rapport à une voie de circulation, et une configuration d'essieu de véhicule.

11. Système selon l'une quelconque des revendications 7 à 10, dans lequel lesdites caractéristiques de voie de circulation comprennent au moins l'une des caractéristiques suivantes : une largeur de voie de circulation (WL), une courbure de voie de circulation, et un nombre de sections de voie de circulation.

12. Système selon l'une quelconque des revendications 7 à 11, comprenant de plus des moyens pour délivrer ledit profil de couple (TP) pour ladite commande en fonction de caractéristiques de l'environnement dudit véhicule le long de ladite voie de circulation (L1).

13. Véhicule à moteur (1, 1a) comprenant un système (I) selon l'une quelconque des revendications 7 à 12.

14. Programme informatique (P) pour l'aide au suivi de voie pour un véhicule (1, 1a), ledit programme informatique (P) comprenant un code de programme qui, lorsqu'il est exécuté par une unité de commande électronique (100) ou un autre ordinateur (500) connecté à l'unité de commande électronique (100), provoque l'exécution par l'unité de commande électronique (100) des étapes selon les revendications 1 à 6.

15. Produit de programme informatique comprenant un support de mémorisation numérique mémorisant le programme informatique (P) selon la revendication 14.
